# EUROPEAN PATENT APPLICATION

(11) **EP 3 613 297 A1**
(43) Date of publication of application: **26.02.2020**
(21) Application number: 18189812.3
(22) Date of filing: 20.08.2018
(51) Int. Cl.: A23L 29/231, A23G 1/00

(54) **CACAO POD HUSK DERIVED PECTIN, METHOD OF ITS PREPARATION AND ITS USE IN FOOD, PHARMACEUTICAL AND COSMETIC COMPOSITIONS**

(71) Applicant: Cabosse Naturals NV, 1500 Halle (BE)
(72) Inventor: Bernaert, Herwig, 1500 Halle (BE); Kopp, Gabi, 1500 Halle (BE); Corno, Marcello, 1500 Halle (BE)
(74) Representative: Brantsandpatents bvba

(57) **Abstract**

The invention concerns cacao pod husk derived pectin, characterized in: a degree of acetylation of 20-60 wt% of dry extract; a degree of methylation of 10-30 wt% of dry extract; a galacturonic acid content of at least 50 wt% of ash free dry matter, and wherein said cacao pod husk is substantially devoid from cacao beans. The invention also concerns a method for preparing said pectin, comprising a hot water extraction from cacao husks, wherein the pH upon completion of the extraction is between pH 2.0 and 6.5, and wherein the temperature for the hot water extraction is 90-100°C. The invention also concerns the use of said water soluble dietary fiber from cacao pod husk as an O/W emulsifier, an elastic agent and a coating agent in food, cosmetics and pharmaceutical products, and as a stabilizer, a lecithin replacement, a bake stability agent and a texturizer in food products.

## Description

### FlELD OF THE INVENTION

The present invention relates to cacao pod husk derived pectin obtainable by processing cacao pod husks substantially devoid from cacao beans, wherein said pectin is characterized by a high galacturonic acid content, low degree of methyl esterification and high degree of acetylation. In a second aspect, the present invention also relates to a method for extraction of said pectin. In a third aspect, the present invention relates the use of said cacao pod husk derived pectin for applications in food, cosmetic and pharmaceutical compositions.

### BACKGROUND

*Theobroma cacao* L., also known as a cacao tree, is a small tree in the family Malvaceae. A cacao tree produces about 20 usable pods a year. The cacao pods contain seeds, also known as cacao beans, surrounded by pod husks, placenta and pulp. The cacao seeds are used as cacao mass, powder or butter in various food applications. Given the value and great demand of the cacao seeds, the harvesting and processing of cacao is mainly focused on minimizing damage to the cacao seeds, while very little care and attention is paid to the pulp, placenta and pod husks surrounding the seeds. Traditionally, cacao pods are removed from the trees and are immediately cut in half using machetes. The seed bunch is saved, while the husk and stem are discarded.

Despite the importance of cacao as an agricultural export commodity, only approximately 10% of the gross weight of cacao pod is utilized for cacao mass, cacao powder and cacao butter production, while the majority of the total pod weight (cacao pulp, cacao placenta and cacao pod husks) is discarded as cacao waste.

Cacao pod husks represent the biggest part of cacao byproducts obtained during cacao bean production. For each ton of dried beans produced, about 16 tons (on a fresh weight basis) of cacao pod husks are left to decompose in plantations, thereby representing a serious disposal problem. The proportion of the cacao pod husk in the pod mass is in the range 68-75 wt%. Therefore, efforts have been made to convert the husk into a beneficial byproduct. The relatively high potassium content allows partial utilization of cacao pod husks as a soil fertilizer. However, rotting pods rapidly become a source of infection with microorganisms such as black pod rot. Therefore, most of the cacao pod husks are burned or buried.

Another way to utilize cacao husks is to use them as a source of insoluble and soluble fiber. Insoluble fiber such as cellulose, hemicellulose and lignin represent on average 60-70% of total fiber in cacao husks.

Pectin is a water soluble fiber and complex polysaccharide found naturally in higher plants. Pectin consists of mainly galacturonic acid units linked by α-(1 4) linkages. Pectin is widely used for its gelling properties in food, cosmetic and pharmaceutical industries. In the food industry, pectin is extracted mainly from byproducts such as citrus peel, apple pomace and sugar beet pulp.

Several studies disclosed the utilization of the cacao husks as a source of pectin.

Chan & Choo, Food Chemistry, 2013, 141, 3752-3758, investigated the effects of extraction conditions, such as temperature, extraction time and substrate on yields and properties of pectin isolated from cacao pod husks. Pectin was extracted using water, citric acid at pH 2.5 or 4.0, or hydrochloric acid at pH 2.5 or 4.0. It was revealed that temperature, extraction time and substrate-extractant ratio affected the yields, galacturonic acid contents, degrees of methyl esterification (DM) and degrees of acetylation (DA) of the extracted pectins. The yields and galacturonic acid contents of the extracted pectins ranged from 3.38-7.62% to 31.19-65.20%, respectively. The DM and DA of the extracted pectins ranged from 7.17-57.86% to 1.01-3.48%, respectively. The highest yield of pectin (7.62%) was obtained using citric acid at pH 2.5 [1:25 (w/v)] at 95°C for 3.0 h. The highest galacturonic acid content (65.20%) in the pectin was obtained using water [1:25 (w/v)] at 95°C for 3.0 h.

Vriesmann & Petkowicz, International Journal of Biological Macromolecules, 2017, 101, 146-152, disclosed cacao pod husks as a source of low-methoxyl, highly acetylated pectin. Said pectin is characterized by a gelling capacity in acidic media. Aqueous nitric acid was used as an extracting solvent in an optimized process of pectin extraction for a short extraction time (30 min), at pH 3.5, and temperature of 100°C. The mean experimental extraction yield was 10.7% ± 0.26 calculated on dry cacao pod husk weight. Galacturonic acid (59.2%) was reported as a predominant residue of reported pectin, followed by significant proportions of rhamnose (11.6%) and galactose (20.3%). The degree of methyl-esterification (DM) was 41.0% and the degree of acetylation (DA) was 17.6%.

EP 1 352 570 discloses a process for extracting the water-soluble dietary fiber from cacao bean husks and the use of said water-soluble dietary fiber for diferent purposes in food products, such as, but not limited to acidic protein foods, milk beverages, chocolate beverages and the like. Said water soluble fibers were also shown to be coating agents with improved coatability, age resistors for starch-containing food products, and shelf-life extenders effective even when added only in small amounts to food products.

Some above-mentioned disclosures are aiming at methods of obtaining pectin of physio-chemical and technological characteristics which limit the use of such pectin in food products. Some above-mentioned disclosures are directed to obtaining the water soluble fiber from cacao bean husks, which does not address the problem of cacao pod disposal. Furthermore, some of the disclosed processes are characterized by using non-green extraction solvents or/and long and severe extraction conditions, which limits their industrial applicability.

The present invention aims to resolve at least some of the problems related to processing cacao pod husks. The invention thereto aims to provide an efficient utilization of cacao pod husks for multiple purposes.

### SUMMARY OF THE INVENTION

The present invention and its embodiments serve to provide a solution to one or more of the above-mentioned problems referred to an excessive cacao pod husk waste.

To this end, the present invention relates to the utilization of the discarded cacao pod husks in order to obtain cacao pod husk derived pectin according to claim 1.

The term "cacao pod husk", as used herein, means the outer peel i.e. husk of the cacao fruit, substantially devoid from cacao beans.

The term "dietary fiber", as used herein, means the sum of the indigestible carbohydrate and carbohydrate components of food, including cellulose, lignin, hemicelluloses, pentosans, gums and pectins.

Cacao pod husks are rich in dietary fiber and therefore they can be used as a cheap and abundant source for dietary fiber extraction. Cacao pod husk derived pectin obtained according to the present invention is of such physio-chemical characteristics that make it suitable for use as an ingredient in food, cosmetics and pharmaceutical products.

In a second aspect, the present invention is directed to a method according to claim 2. More particularly, the method as described herein provides the preparation of said cacao pod husk derived pectin in a process comprising hot water extraction from cacao husks, wherein the pH upon completion of the extraction is between pH 2.0 and pH 6.5, wherein the temperature for the hot water extraction is between 90-100°C.

Preferred embodiments of the method used are shown in claims 3 and 4.

The methods of invention have further advantages of minimal processing times and minimal use of non-natural ingredients, leading to a more clear label of the products comprising cacao pod husk derived pectin of the present invention. The said method enables obtaining said pectin in the high yield, wherein said pectin is characterized in high content of galacturonic acid, low degree of methyl esterification, which is particularly important for the food industry, and a high degree of acetylation, which has an effect on the surface activity, emulsion stability, and viscosity of the product comprising said pectin.

In a third aspect, the present invention relates to a use according to claim 5. Cacao pod husk derived pectin obtained according to the present invention is a suitable dispersion stabilizer in food products.

Preferred embodiments of the use of cacao pod husk derived pectin as a stabilizer disclosed in the present invention are shown in claims 6 and 7.

Cacao pod husk derived pectin obtained according to the present invention is very effective in stabilizing the oil in water (O/W) emulsions both at high and low concentrations. Said pectin showed a very good solubility in water, but no solubility in oil, not even at high temperature. Moreover, said pectin efficiently enhanced viscosity of different solutions even when applied in low concentrations. Applications of said pectin in food products are numerous, due to its good water solubility and easy application. Cacao pod husk derived pectin can be also used in cosmetics products, such as, but not limited to lotions, creams, shower gels, balms, after shave creams and gels, and the like.

In a fourth aspect, the present invention relates to a use according to claim 8. Cacao pod husk derived pectin obtained according to the present invention is a suitable lecithin replacement in food products.

Preferred embodiment for the use of cacao pod husk derived pectin as a lecithin replacement is shown in claim 9.

Soy lecithin has been the frontrunner for many years as a common emulsifier in many common consumer goods including chocolate, bakery and confectionery products, and even nutritional supplements. But with the growing concerns around GMO crops and allergic/intolerance reactions that surround soy in general, it urges to consider replacing this ingredient with a suitable stabilizer such as cacao pod husk derived pectin disclosed in the present invention.

In a fifth aspect, the present invention relates to a use according to claim 10. Cacao pod husk derived pectin obtained according to the present invention is a suitable O/W emulsifier in food, cosmetic and pharmaceutical products. Said powder was shown to be a very efficient emulsifying agent which keeps emulsions stable for a couple of days at room temperature. This activity was comparable or even better than the one of a reference emulsifier, such as lecithin.

The preferred embodiments of such use are shown in claims 11 and 12.

In a sixth aspect, the present invention relates to a use according to claim 13. Cacao pod husk derived pectin obtained according to the present invention is a suitable coating agent in food, cosmetic and pharmaceutical products.

In a seventh aspect, the present invention relates to a use according to claim 14.

Cacao pod husk derived pectin is used to increase bake stability of water based fillings comprising said pectin.

In an eighth aspect, the present invention relates to a use according to claim 15. Cacao pod husk derived pectin of the present invention is used as a texturizer in food comprising encapsulated probiotics.

In a ninth aspect the present invention relates to a use according to claim 16. Cacao pod husk derived pectin is used as a mouthfeel improving agent.

In a tenth aspect the present invention relates to a use according to claim 17. Cacao pod husk derived pectin is used as an elastic agent in food, cosmetic and pharmaceutical products.

### DETAILED DESCRIPTION OF THE INVENTION

The present invention concerns solving some of the problems related to cacao pod husk utilizations. The present invention discloses cacao pod husk derived pectin obtainable from cacao pod husks which are substantially devoid from cacao beans.

The present invention also discloses methods of extraction of said pectin and its further use for various purposes in food, pharmaceutical and cosmetic products.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise.

"Comprise", "comprising" and "comprises" and comprised of" as used herein are synonymous with "include", "including", "includes" or "contain", "containing", "contains" and are inclusive or open-ended terms that specify the presence of what follows e.g. component and do not exclude or preclude the presence of additional, non-recited components, features, elements, members, steps known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in sequences other than those described or illustrated herein;

The expression "% by weight", "weight percent", "%wt" or "wt%", here and throughout the description unless otherwise defined, refers to the relative weight of the respective component based on the overall weight of the formulation.

Reference throughout this specification to "one embodiment" or "an embodiment" means that a particular feature, structure or characteristic described in connection with the embodiment is included in at least one embodiment of the present invention. Thus the appearance of phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the terms "cacao" and "cocoa" are both often used to refer to the same items. For example, cacao beans are often referred to as "cocoa" beans. In the present application, the term "cacao" is generally used to refer to the used materials originating from *Theobroma cacao*.

The term "cacao pod" refers to a cacao fruit, which comprises cacao pod husks, cacao pulp, cacao placenta and cacao beans.

The term "acidity", as used herein, means the pH range from pH 7.0 and below.

The term "acidic protein food products", as used herein, means the acidic food products containing animal or vegetable proteins. Said products include a variety of acidic protein food products, for example, acidic protein beverages obtained by adding citrus fruit juices or other fruit juices, or organic acids such as citric acid or lactic acid or inorganic acids such as phosphoric acid, to beverages containing animal or vegetable proteins such as milk, soybean milk or the like, acidic dairy beverages obtained by acidifying dairy products, acidic frozen desserts such as acidic ice cream, frozen yogurt and the like obtained by adding fruit juice or the like to milk component-containing frozen desserts such as ice cream, acidic desserts obtained by adding fruit juices or the like to gelled foods such as puddings or bavarois, as well as coffee beverages, lactic acid bacteria beverages (containing live bacteria, or sterilized types), fermented milk (solid or liquid), and the like. Animal or vegetable proteins including cow milk, sheep milk, skimmed milk, and soybean milk, whole milk powder forms of such milk, skim milk powder, soybean milk powder, sugar-added milk, milk concentrates, processed milk fortified with minerals such as calcium or vitamins, fermented milk, and proteins derived therefrom. Fermented milk is milk obtained by sterilizing the aforementioned animal or vegetable proteins and then adding a lactic acid bacteria starter for fermentation, and if desired, it may be powdered or the like may be added thereto, or it may be heat sterilized.

The term "starch-containing food products", as used herein, means the food products prepared by cooking, steaming or boiling dough prepared using wheat flour as the raw material. Said starch containing food products comprise, but are not limited to cookies, biscuits, crackers, sponge cakes, various types of bread, or dough composed mainly of starch, such as rice cakes.

The present invention discloses methods of producing cacao pod husk derived pectin with several benefits for further use in food and related products. The pectin obtained by the present invention is characterized by the high level of galacturonic acid, and a particularly low methyl esterification degree and high acetylation degree. The methods disclosed in the present invention are optimized to maximize the extraction yield, minimize processing time, number of processing steps and use of non-green solvents and reactants. Thus cacao pod husk derived pectin obtained according to the present invention is a green product with a more clean label.

The first step of the process for complete utilization of cacao byproducts according to the present invention is pre-treatment of cacao pod husks in order to debacterize the pod surface. Cacao pods are perishable products, thus rotting pods rapidly become a source of infection with microorganisms. Therefore, it is necessary to ensure their microbiological quality prior to production process. For such pre-treatment, according to the present invention, unopened cacao pods are treated with a preserving agent for a period of time sufficient to neutralize any harmful substances on the surface of the cacao fruit and stabilize lignification of the outer layer (peeling) of the cacao fruit. Almost any known preserving agent effective in a low concentration can be employed in this process, such as sorbic acid and salts thereof, sulfur dioxide, chlorine, chlorides, nitrates, hypochlorites, preferably those of the alkali metals, disulfites, ozone, methylformate, diphenyl, sodium ortho-phenyl phenolate, nitrogen trichloride and others. Typically, the preserving agent is employed in the form of an aqueous solution of a low but effective concentration. The concentration of the preserving agent depends, of course, upon its effectiveness and varies considerably. Optimum concentrations which do not detrimentally affect the quality of cacao fruit, can readily be determined by a person skilled in the art by routine experimentation. It is also possible to apply the preserving agent by exposing the unopened cacao pod husks to the vapors of vaporizable preserving agents, preferably diluted with air or inert gases. The treatment with the preserving agent varies depending upon the concentration and effectiveness of the agent and may last for a period of time between 1 hour and up to sixty days, preferably between 8 hours and 8 days although it is not limited to such a period of time. The "whole", harvested cacao fruit is placed directly into a bath or atmosphere containing a preservative, typically at a low but effective concentration of preservative, for instance, between 0.2 and 10%, and for a period of time sufficient to neutralize any toxic substances on the surface of the fruit and to stabilize lignification of the outer layer (peeling) of the fruit. To accomplish this, it generally requires between 10 min and 3 or more months, preferably 30 min to 24 h, most preferably 30 min to 3 h of exposure to the bath or atmosphere, depending upon the effectiveness and type of preservative used. Any known preservative can be employed in this step of the process, for example, sorbic acid, sorbic acid salts, sulfur dioxide, chlorides, nitrates, chlorine, hypochlorite, formaldehyde, disulfides, ozone, methylformate, diphenyl, ammonia, sodium o-phenyl phenolate, nitrogen trichloride, and others. The preferred preserving agents are sorbic acid, sulfur dioxide, chlorine, sodium chloride and hypochlorite, as many other known agents, although useful, tend to affect the taste and nutritive value of the treated cacao pods.

According to the present invention, cacao pod husk derived pectin can be extracted from cacao pod husks with outer peel, or cacao pod husks obtained after the removal of the outer peel. The outer peel is preferably not discarded, in order to achieve the high pectin yield in the said extraction process.

In accordance with the method for processing the cacao pods disclosed in the present invention, the outer skin or peeling of the harvested cacao fruit can be optionally removed before the fruit is opened to remove the cacao beans together with mucilage pulp and placenta. Many varieties of cacao fruit and especially younger fruit may have their peelings removed by conventional techniques without first subjecting the said fruit to any special treatment. However, an average mixture of harvested fruit contains a significant percentage of certain varieties and/or older fruit which require a pre-treatment before the peelings are removed. In case of removing the outer skin, to ease the peeling of pods, cacao pod husks are steamed and/or treated by using an alkaline solution. For this purpose the cacao fruit is treated with an alkaline bath such as an alkali metal hydroxide or, preferably, alkali metal carbonate bath at a temperature between 50°C and about 100°C for a short period of time, e.g., generally from ½ minute to 30 minutes, preferably from 3 minutes to 8 minutes. Thereafter, the alkaline-treated fruit are passed through a heating zone, preferably through an infrared heated channel. The alkaline treatment at 50°C to 100°C for a short period of time causes the cacao fruit to swell to a certain extent. This swelling facilitates subsequent removal of the outer layers of the fruit such as the fruit peel. These outer layers are removed, for instance, by means of scrapers, knives, rollers, discs, or other such/similar means. The preferred means of this type are discs rotating at a high velocity, emery rollers, toothed or corrugated rubber or plastic rollers. It will be understood that lower temperatures and longer treatment times may also be employed.

After the outer peel has been removed in this manner, i.e., using an alkaline pre-treatment, the remaining fruit is neutralized and the action of enzymes on the fruit surface is reduced or completely eliminated by treating the fruit with a suitable acid. Said acid is preferably an edible acid, such as, but not limited to citric acid, malic acid, tartaric acid, ascorbic acid, and the like. Phosphoric acid and hydrochloric acid may also be used. Treatment with sulfur dioxide is also possible and frequently of considerable advantage. The amount of acid added is such that the pH-value of the treated cacao fruit is below a pH of 7.0, preferably at a pH between 5.0 and 6.0.

The following step disclosed in the present invention comprises opening of the cacao fruit and removal of cacao beans together with pulp and placenta. The opening of the cacao pods is done by a cacao pod splitting machine, or any other suitable instrument. The pod husk substantially devoid from cacao beans is shredded in any cutting machine or disintegrator to obtain cacao pod husk flakes. Drying of the cacao pod husk flakes may be accomplished in any conventional drying system. Drying of the cacao pod husk flakes is performed at a maximum temperature not exceeding 60°C, preferably at a temperature in the interval 50-60°C. Moisture concentration was controlled to be below 10 wt%, preferably below 5 wt%. In the preferred embodiment, cacao pod husk flakes are of a homogenous particle size distribution, with less than 5% of particles smaller than 1 mm, and at least 50% of particles greater than 5 mm.

The milling of the obtained cacao pod husk flakes is performed with a classifier mill or any other suitable milling system. Particle size requirement is dependent on the application of cacao pod husk powder. In one embodiment, wherein a coarse texture is preferred, the particle size distribution targeting D(90) = 50 µm is required. In another embodiment of the invention, wherein very smooth textures should be obtained, a particle size distribution below D(90) = 20µm, preferably D(90) = 10µm is required. This is done with a milling device specialized to get such fine particle size distributions.

Recently, considerable attention has been directed towards the importance of dietary fiber. Dietary fiber is generally defined as the sum of the indigestible carbohydrate and carbohydrate components of food, including cellulose, lignin, hemicelluloses, pentosans, gums and pectins. The market for dietary fiber is highly competitive. The production of dietary fiber rich products from fruit byproducts and the potential preparation of those fibers with other associated bioactive compounds is gaining more attention. While milling and enzymatic digesting have been the main steps in obtaining high dietary fiber powders from cereals; wet milling, washing, drying and dry milling are very important in producing fibers from fruit.

The cacao pod husk powder was subjected to a prewashing in absolute or diluted ethanol, preferably ethanol 85% *v*/*v.* Optionally, this step was repeated. The excessive liquid was decanted, filtered, evaporated or decreased by any suitable method.

Alternatively, cacao pod husk powder can be treated with suitable protease, such as, but not limited to *Bacillus licheniformis* protease, to enhance the peptide extraction process. Said bacterial protease can be used in a concentration range determined by a skilled person, and generally is 0.1 wt% dry solids, though higher or lower concentrations are equally possible given the multiple factors available.

Alternatively, cacao pod husk flakes may be used without crushing and powdering prior to extraction.

The solid part (cacao pod husk powder after washing and alternatively after treatment with suitable protease) was subjected to an extraction process, using hot water in acidic environment (pH < 7.0), preferably at pH 2.0 to 6.5, most preferably pH 2.5 to 4.0. Hot water extracts obtained outside of this pH range were shown not to adequately exhibit the function important for future use according to the present invention.

When extraction is performed in the strongly acidic pH range of lower than pH 1.5, the dietary fiber decomposes to a lower molecular weight and therefore loses its functionality.

Since dietary fiber extracted in the alkaline range of pH 7.0 and above has a high hemicellulose content and a low content of pectinic polysaccharides containing galacturonic acid, it cannot provide adequate dispersion stability of proteins in the weak acidic pH range above the isoelectric point. In addition, galacturonic acid methyl ester is partially decomposed while the polysaccharides themselves are decomposed by elimination. The flavor is also impaired due to reaction of sugars with the protein.

The ratio solid mater/extractant was not higher than 1:1 w/v, preferably not higher than 1:10 w/v, most preferably not higher than 1:20 w/v. The acids used for the extraction procedure can be any acid suitable for use in the food industry, such as, but not limited to acetic, citric, lactic, malic, tartaric, hydrochloric, nitric, oxalic, phosphoric and sulfuric acid. In a preferred embodiment, this acid is an organic acid such as acetic, citric, lactic, malic and tartaric, most preferably citric acid.

The extraction temperature to obtain the cacao pod husk derived pectin in the aforementioned pH range is preferably between 90-100°C under pressure. When the extraction is performed at a temperature of below 90°C, time is required for elution of the pectin, thus creating an economic disadvantage. On the other hand, while the extraction is completed in a shorter time with a higher temperature, an excessively high temperature will adversely affect the flavor and color while also resulting in reduced function due to the lower molecular weight of cacao pod husk derived pectin; the temperature is therefore preferably no higher than 110°C, most preferably no higher than 100°C.

The extraction process is performed during the period up to 5 h, preferably 1.5-4 h, most preferably 3h. Optionally, high pressure, or any other suitable industrial method can be used to facilitate the extraction process.

Alternatively, the extraction can be facilitated by the treatment with enzymes such as proteases, cellulases, hemicellulases, pectinases, amylases and the like. Also, while the obtained cacao pod husk derived pectin can be dried for direct use after the extraction, in a preferred embodiment the mineral components are removed (desalted) by electrodialysis, ion-exchange resin treatment, or the like. Optionally, cacao pod husk derived pectin of a more satisfactory quality can be obtained by carrying out an active carbon treatment, resin treatment, precipitation treatment with a solvent such as ethanol or isopropanol and the like. Cacao pod husk derived pectin of a more satisfactory quality can also be obtained by removal of the low molecular color components or foul-tasting components (purification) by UF membrane or ceramic filter separation.

After the acid extraction of the water soluble material, the pH is not lower than 2.0. After cooling, cacao pod husk derived pectin is dried using the centrifugation. This was done using a standard centrifuge or any other suitable system, for not shorter than 30 min in order to achieve separation of the water soluble fraction and precipitating fraction. The separated precipitating portion was combined with an equivalent weight of water, or any other suitable solvent or solvent mixture, and the mixture was again centrifuged. The resulting supernatant liquid was mixed with the previous water-soluble fraction and the extract was directly lyophilized to obtain cacao pod husk derived pectin. Alternatively, cacao pod husk derived pectin can be purified by an active carbon column or any other suitable purification process.

The following step is precipitation of cacao pod husk derived pectin using alcohol, preferably ethanol. Cacao pod husk derived pectin was mixed with said alcohol and precipitate is collected using simple decantation process. Precipitate was collected and optionally re-washed with ethanol in concentrations 80%, 90% and 99% v/v. In a preferred embodiment after adding 85% ethanol to cacao pod husk derived pectin extract a concentration of 50% of ethanol is obtained in supernatant and pectin was precipitated. The precipitate was successively re-washed with ethanol in the same manner and air dried to obtain said pectin. The precipitation process and washing with ethanol can be repeated until a precipitate of suitable characteristics is obtained. Precipitation temperature was not higher than 85°C, preferably not higher than 70°C, most preferably the precipitation temperature is 60°C.

Alternatively, any sort of electro-dialysis apparatus or similar can be used to precipitate cacao pod husk derived pectin.

Additionally, cacao pod husk derived pectin can be recovered by filtration on a suitable strainer. If necessary said recovered cacao pod husk derived pectin can be washed and precipitated by using alcohol in the above-mentioned step.

After the drying process, the weight of obtained cacao pod husk derived pectin is measured and said cacao pod husk derived pectin is further used for preparing disclosed compositions. The total yield of obtained cacao pod husk derived pectin is not less than 3.0 wt%, preferably not less than 6.0 wt%, most preferably not less than 10.0 wt%, calculated on a dry cacao pod husk powder.

Cacao pod husk derived pectin extracted from cacao pod husks according to the invention is characterized by properties similar to those of pectin derived from root vegetables, particularly potato derived pectin. However, pectin according to the present invention differs in its properties from pectin derived from fruit such as apples or citrus fruit. The fruit derived pectin is used as a stabilizer for acidic dairy beverages, utilizing their function of stabilizing dispersion of proteins in the pH range below the isoelectric point, but the pectin of the invention has the function of stabilizing dispersion of proteins in a pH range above the isoelectric point, in a state of higher viscosity, thereby making it possible to prepare acidic protein food products that are stable in a pH range above the isoelectric point.

Cacao pod husk derived pectin according to the present invention comprises pectin, characterized by a low methyl esterification degree. The said degree of methyl esterification is not higher than 40%, preferably 10-30%, most preferably 10-15% of dry extract. The degree of esterification has an impact on the physical properties of pectin: emulsion formation, surface tension, stabilization of tissue, and gel characteristics.

Depending on their degree of methyl esterification (DE), pectins are referred to as high methyl esterified pectins or high metoxy pectins (DM ≥ 50 %) or low methyl esterified (methoxy) pectins (DE < 50%). High methyl esterified pectins form gels in an acidic medium (pH 2.0-3.5) if sucrose is present at a concentration higher than 55 wt%. Low methyl esterified (methoxy) pectins can gel over a larger pH range (2.0-6.0) in the presence of a divalent ion, such as calcium. In this case, the presence of sucrose is not necessary for forming the gel.

Pectins with a low degree of methyl esterification are particularly suitable for making low sugar confectionery products, such as, but not limited to, jams and different fruit preparations, but also in acidic protein food products such as yoghurts, chocolate milk and milk beverages for use in the food industry. Thus, cacao pod husk derived pectin is characterized by a low methyl esterification degree is suitable for the low sugar confectionary products as well as protein beverages.

Cacao pod husk derived pectin according to the present invention is characterized by a high acetyl esterification degree. The said degree of acetylation is 20-60%, preferably 30-60%, most preferably 40-60% of dry extract. Acetylation, like methylation, decreases the affinity of pectin for cations, which has an impact on the gelling ability of pectin. Furthermore, it has an effect on surface activity, emulsion stability and viscosity of compositions comprising said pectin.

The content of galacturonic acid in said pectin is not less than 50 wt%, preferably not less than 60 wt%, and most preferably not less than 65 wt% of ash free dry material.

An increase in acid strength (that is, decreasing pH) of the water extraction can affect the galacturonic content at the end of this process. Moreover, acid type and concentration affect the yield, physiochemical and functional properties of pectin. Galacturonic acid content was measured according to the Blumenkrantz method, and neutral sugars were measured by GLC as alditol acetates.

However, said cacao pod husk derived pectin is comprising galactose, rhamnose, glucose, mannose, ribose, inositol, myo-inositol, moisture (up to 20 wt%), (glucurono) arabinoxylans (GIcA, Ara and Xyl), galactan (Gal), mannan (Man). Most remarkable were the high amount of arabinoxylans (present in concentration of at least 5 wt% of disclosed cacao pod husk derived pectin) that can be used as prebiotics. The cacao pod husk derived pectin obtained by the present invention is characterized by xylooligosaccharides content of at least 1.5 wt%, preferably at least 3.0 wt% of the dry weight of cacao pod husk derived pectin. The cacao pod husk derived pectin obtained by the present invention is characterized by galactomannan content of at least 1.5 wt%, preferably at least 3.0 wt% of the dry weight of cacao pod husk derived pectin. The cacao pod husk derived pectin obtained by the present invention is characterized by glucomannan content of at least 1.5 wt%, preferably at least 3.0 wt% of the dry weight of cacao pod husk derived pectin.

Xylooligosaccharides selectively feed beneficial bacteria such as bifidobacteria and lactobacilli within the digestive tract. A large number of clinical trials have been conducted with xylooligosaccharides, demonstrating a variety of health benefits, including improvements in blood sugars and lipids, digestive health benefits, laxation, and beneficial changes to immune markers. These health benefits have typically been observed at 1 - 4 g/d, which is a lower dose than required for prebiotics such as fructooligosaccharides and inulin.

Glucomannan is a dietary fiber. Orally, glucomannan is used for constipation, weight loss, diabetes, high cholesterol, overactive thyroid (hyperthyroidism), high blood pressure, and stomach conditions called dumping syndrome and functional gastrointestinal disorders. In food products, glucomannan is used as a thickener or gelling agent. Glucommanan flour and powder are used in food.

Similarly, galactomannans, as dietary fibers are often used in food products to increase the viscosity of the water phase.

The present invention aims to produce a low cost cacao pod husk derived pectin characterized by the additional health benefits (prebiotic), higher market price setting and ingredient functionality. The above-mentioned soluble fibers are particularly suitable for use in fat-based dispersions and have a low impact on adherence and graininess.

The cacao pod husk derived pectin used according to the invention may have any molecular weight value, but it preferably has an average molecular weight of from a few tens of thousands to a few million, more preferably from a few tens of thousands to a few hundred thousand, and specifically from 20,000 to 300,000. The average molecular weight referred to throughout the present specification is the value measured by gel filtration HPLC using a TSK-GEL G-5000PWXL, with standard pullulan as the reference substance.

It is an object of one aspect of the present invention to provide cacao pod husk derived pectin suitable for use in acidic protein foods and preparation methods for said foods. The present invention is aimed at providing heat-sterilized milk beverages whose milk components are stable for prolonged periods and which can be transported at ordinary temperature.

It is an object of another aspect of the invention to provide chocolate beverages with low precipitation of solids and a satisfactory state of dispersion of the fat and milk components. Preparation of chocolate beverages according the invention may be accomplished by any ordinary preparation method, using chocolate components, sweeteners and milk components as raw materials, in addition to using cacao pod husk derived pectin as a dispersion stabilizer. The chocolate components used may be any one or more selected from among cocoa powder, cacao mass, cocoa butter and cocoa butter substitute.

Any publicly known sweetener may be used, for example, one or more selected from sugars such as sucrose, glucose, fructose, isomerized sugar, rice jelly, trehalose, maltitol or sorbitol, or other sweeteners such as aspartame, stevia, glycyrrhizin, thaumatin or the like.

The cacao pod husk derived pectin may be used in an amount of about 0.05-10.00 wt% and preferably 0.10-2.00 wt% with respect to the final food product, but these ranges are not limitative on the scope of the invention as they will vary depending on differences in protein concentration. The acidic food protein products may also be prepared together with conventional stabilizers, for example, polysaccharides such as pectins, water-soluble soybean polysaccharides, carboxymethylcellulose sodium, alginic acid propylene glycol ester, carrageenan, furcellan, tamarind seed polysaccharides, tara gum, karaya gum, guar gum, locust bean gum, tragacanth gum, pullulan, gelan gum, native gelan gum, gum Arabic, dextrin, cyclodextrin, agar, microcrystalline cellulose, xanthan, processed starch and the like, or hydrolysates thereof, gelatin, organic acid salts, polymerization phosphoric acid salts, emulsifiers, heat-denatured proteins and the like.

The dairy products used may be any ordinary products, and as specific examples there may be mentioned milk, whole powdered milk, powdered skimmed milk, cream, butter, whole condensed milk, condensed skimmed milk, processed milk powder and the like.

The amount of the cacao pod husk derived pectin added to a chocolate beverage is preferably 0.05-20.0 wt%, more preferably 0.1-10.0 wt% and most preferably 0.2-3.0 wt% with respect to the final beverage. The stabilizing effect may be inadequate if the amount is too small, while the influence on the viscosity of the beverage increases if the amount is too large. The pH of the chocolate beverage is preferably from pH 5.0-9.0, more preferably pH 5.5-8.0 and most preferably pH 6.0-7.5.

According to the invention, other emulsifiers and dispersion stabilizers may be used in the aforementioned chocolate beverages, regardless of whether they are in liquid form or in a powdered or paste form. Any publicly known emulsifiers or dispersion stabilizers may be used, and specifically there may be mentioned sucrose fatty acid esters, glycerin fatty acid esters, sorbitan fatty acid esters, propylene glycol fatty acid esters, polyglycerin fatty acid esters, lecithin, agar, carrageenan, furcellan, tamarind seed polysaccharides, tara gum, karaya gum, soybean hemicellulose, pectin, xanthan gum, sodium alginate, tragacanth gum, guar gum, locust bean gum, pullulan, gelan gum, gum Arabic, gelatin, casein sodium, various starches, various celluloses.

The cacao pod husk derived pectin provides a viscosity of 10-500 cPs, preferably 30-300 cPs and most preferably 40-200 cPs at 20°C in aqueous solution at 10% concentration.

The cacao pod husk derived pectin according to the present invention may be used as the lecithin replacement in food products. Said food products are, but not limited to chocolate, pastry, beverages, milk beverages, yoghurt, confectionery products, and the like. The cacao pod husk derived pectin may be used in an amount of about 0.05-10.00 wt% and preferably 0.10-5.00 wt% with respect to the final food product, but these ranges are not limitative on the scope of the invention as they will vary depending on the differences of the products. Said food products may contain also other conventional stabilizers, for example, polysaccharides such as pectins, water-soluble soybean polysaccharides, carboxymethylcellulose sodium, alginic acid propylene glycol ester, carrageenan, furcellan, tamarind seed polysaccharides, tara gum, karaya gum, guar gum, locust bean gum, tragacanth gum, pullulan, gelan gum, native gelan gum, gum Arabic, dextrin, cyclodextrin, agar, microcrystalline cellulose, xanthan, processed starch and the like, or hydrolysates thereof, gelatin, organic acid salts, polymerization phosphoric acid salts, emulsifiers, heat-denatured proteins and the like.

In another aspect of the present invention, the cacao pod husk derived pectin can be used as an efficient O/W emulsifier in food, cosmetic and pharmaceutical products. The cacao pod husk derived pectin may be used in an amount of 0.05-50.00 wt%, preferably in amount 0.05-20.00 wt%, most preferably in amount of 0.10-8.00 wt% with respect to the final product. Said cacao pod husk derived pectin is effective in a relatively small amount, it is compatible with additives commonly used in O/W emulsions and it is an efficient emulsifier oven a wide pH range of the finished product. The said products are characterized by good tolerability and hypo-allergenic properties. Said cacao pod husk derived pectin is particularly suitable for cosmetic products such as, but not limited to body lotions, body and face creams, cleansing emulsions, sun block creams, body milk and the like. Cacao pod husk derived pectin according to the invention is characterized by a good skin tolerability and a pleasant feeling when applied topically. The body care products comprising said pectin are characterized by the good stability and no separation of the phases.

It is an object of another aspect of the invention to provide a coating agent which exhibits effects of glazing, protection from oxidation, shelf-life extension, better coating properties and stronger sugar coating for food products, and which can be produced easily and inexpensively.

When cacao pod husk derived pectin is used as a coating agent, it is preferably added at 0.1-50 wt% and most preferably 0.5-30 wt% with respect to the total coating agent. It may also be used outside of these ranges when used in a sugar coating. Depending on the amount of sugar, a small amount of fiber may result in low coating strength or cracking and flaking of the sugar coating, while an excessive amount of fiber will tend to lengthen the drying time, and therefore the fiber is preferably used within the ranges specified above.

The cacao pod husk derived pectin may be used alone as a coating agent but, if necessary, there may also be added plasticizers, pigments, dispersing agents, solvents, taste substances, coloring agents, preservatives, de-foaming agents and the like. It may be used together with other coating agents, for example, polysaccharides such as guar gum, tragacanth gum, xanthan gum, carrageenan, tamarind gum, locust bean gum, agar, gum Arabic, processed starch, hydroxypropylmethyl cellulose and pullulan or proteins such as gelatin.

The method of using the said pectin as a coating agent may involve spraying or immersion after preparing a solution of the pectin. As apparatuses for spray coating any suitable apparatus including hi-coaters, aqua coaters, flow coaters, Spira-flows, rotor container-equipped fluidized bed apparatuses (products of Freund Industries) and the like can be used. For immersion, any apparatus having an immersion layer and a drier may be used.

The invention further discloses a food product comprising the cacao pod husk derived pectin according to the invention. Said food product comprises, but is not limited to a frozen confection, yoghurt, dessert, a bakery product, or a sauce.

According to the present invention said pectin is added to an ice cream to get a product which is spooned easily by a spoon, even relatively rapidly after being taken out of a freezer, or the like. When the cacao pod husk derived pectin of the invention is used as an ice-cream texturizer, said pectin is added at 0.1-25.0 wt% 0.2-10.0 wt% and most preferably 0.5-5.0 wt% with respect to total weight of the ice cream, or finished product. Cacao pod husk derived pectin may be pre-added, or it may be added together with other materials such as water and mixed therewith, and then cooked, steamed or boiled, according to the ordinary methods for various food products, to obtain different food products. In addition, the ice cream comprising the pectin of the present invention is characterized by an excellent softness in the mouth, even at a freezing temperature and excellent flavor, without the excessive addition of components having an anti-freezing effect such as salt, alcohol and the like to an ice cream mixture.

Baking stable water-based preparations are used for bakery products with the aim to pass the baking process together with the dough. Said water based preparations have to endure the heat during the baking process without changing the shape or volume. The cacao pod husk derived pectin of the invention can be used as an agent for the improvement of baking stability of various water based preparations, such as, but not limited to jams, jellies, jelly coatings, fillings, and the like. The cacao pod husk pectin of the invention showed a pseudoelastic gelification when used in the concentration of 0.01-25.0 wt% in the finished product.

The cacao pod husk derived pectin of the invention can be used as a texturizer in a cream comprising encapsulated probiotics. Said pectin creates a texturizing, smoothening effect without harming the survival of the probiotic bacteria in the composition. Said pectin is used in the concentration range of 0.01-50.00 wt% in the finished product.

The cacao pod husk derived pectin of the invention can be used as an agent for improving the mouthfeel of instant mixes. The drinks are characterized by a fullness, nice mouthfeel and slightly higher thickness than a standard drink, when said pectin is used in the concentration range 0.01-25.0 wt% in the finished product.

The cacao pod husk derived pectin of the invention can be used as an elastic agent in food, cosmetics and pharmaceutical products. Said pectin, when used in concentration range 0.01-25.0 wt% in the finished product, shows an elastic effect which is not obtainable by using standard stabilizers. The cacao pod husk derived pectin is particularly suitable for cold drinks, flans, panna cotta, puddings and the like, as well as for non-food products such as gels and creams.

The invention is further described by the following non-limiting examples which further illustrate the invention, and are not intended to, nor should they be interpreted to, limit the scope of protection.

### EXAMPLES

The present invention will now be further exemplified with reference to the following example(s). The present invention is in no way limited to the following examples, or preferred embodiments stated in the text. On the contrary, disclosed products, methods and applications according to the present invention may be realized in many different ways without departing from the scope of invention.

### Example 1:

### Influence of pH on cacao pod husk derived pectin extraction and its properties

Cacao pod husks with peel (25 kg) were debacterizised and opened to remove beans and pulp. The remaining pod husk was shredded in any disintegrator and dried at 55°C to get cacao pod husk flakes. Moisture concentration was 4.8 %. The size of the flakes was adjusted to that of 95 % within 1mm and 5 mm and 5 % of particles below 1 mm. A classifier mill was used to mill the husks to a powder.

Obtained cacao pod husk powder (500 g) was was treated with 85% ethanol [powder:ethanol, 1:4 (w/v)] for four times at 50 °C for 20 min. The precipitates of each treatment were collected, combined and dispersed in 5.5 I of water. The dispersion was divided into 500 g portions, and the pH value of portions were adjusted to pH 2.0, 3.0, 4.0, 5.0, 6.0, 7.0, 8.0 and 9.0, respectfully, using citric acid or sodium hydroxide. Mixtures with an adjusted pH were heated at 95°C for 3 h for extraction of cacao pod husk derived pectin. After cooling, each extract was centrifuged (10,000 g x 30 min) to separate the water-soluble fraction and precipitating fraction. The separated precipitating portion was combined with an equivalent weight of water, the mixture was again centrifuged and the resulting supernatant liquid was mixed with the previous water-soluble fraction and precipitated with 0.5 I ethanol (85% v/v). The precipitate was collected and the water soluble fraction was again treated with 0.5 I ethanol (85% v/v). Collected precipitates were lyophilized to obtain cacao pod husk derived pectin. The recovered samples of cacao pod husk derived pectin were further used to prepare the following composition: sugar solution (35% solution) 10 parts, solution of pectin (1% solution) 20 parts, milk 20 parts and citric acid solution (50%) solution for adjustment to pH 5.0. The dispersion stabilizing function of samples obtained at various pH values during extraction on milk protein at pH 5.0 was evaluated.

Test samples of cacao pod husk dietary fiber obtained at pH 7.0, 8.0 and 9.0 showed visible aggregation, while the sample obtained at pH 2.0 showed slight aggregation. Other samples showed no aggregation for the time of observation (48h).

Cacao pod husk derived pectin was shown to exhibit a dispersion stabilizing function on the protein at pH 5.0, when the pH of the extraction process to obtain said pectin was within the range of pH 2.0 to 6.5.

### Example 2:

### Influence of temperature and extraction time on cacao pod husk derived pectin extraction and its properties

The two portions (500 g) of cacao pod husk powder were dispersed in water prepared according to Example 1, subjected to mild extraction in hot water with added citric acid to adjust a pH value at 2.5 (1:25 (w/v)). The first portion was extracted at a temperature of 95°C, during the 3 h to obtain pectin A, while the second portion was extracted at 85°C, during 1h to obtain pectin B. After the extraction, the phases were separated by centrifuging and then twice washed with 85% v/v ethanol. The obtained precipitates were lyophilized and measured. The yields of obtained pectins A and B, were 5.85 and 4.37%, respectively. The obtained cacao pod husk derived pectins were used as emulsifiers in comparison to lecithin. Equivalent amounts of water and sunflower oil were mixed with 2.00 wt% and 0.25 wt% of cacao pod husk dietary fiber obtained by the above-mentioned extractions, and lecithin 1.00 wt% was used as a reference emulsifying agent. Cacao pod husk derived pectin A showed good emulsion stabilizing effect in both tested concentrations, comparable to or better than the stabilizing effect of lecithin. Said dispersions were stable for 48h, and showed no separation/dividing of phases. The dispersions made with cacao pod husk derived pectinB obtained by extraction at 85°C, during 1h, did not show satisfying dispersion capability, as the phases were divided after the 4 h.

Example 3:

### Use the cacao pod husk derived pectin as stabilizer in yogurt preparation

Cacao pod husk derived pectin A as obtained in Example 2 was used to confirm protein dispersion stabilization at pH 5.0 in the acidic milk beverage (yoghurt). Commercially available apple pectin was used as a reference stabilizer in the reference sample.

After mixing 20 parts of a 1% stabilizing solution containing either cacao pod husk derived pectin or commercially available apple pectin, 10 parts of a 35% sugar solution and 20 parts of an 8% powdered skimmed milk solution, the mixture was cooled down and 50% citric acid solution was added in drops to adjust the pH value at 5.0. A homogenizer was used for homogenization of yoghurt samples at 150 kgf/cm2.

The yoghurt samples containing cacao pod husk derived pectin as the stabilizer were confirmed to exhibit protein dispersion stabilization at pH 5.0, which is above the isoelectric point of milk protein (pH 4.5). In addition, the viscosity of the yogurt was high and the beverage was characterized by a full body texture.

The yoghurt drink obtained using cacao pod husk derived pectin was stable, without visible aggregation or dividing of phases, without any kind of liquid collection on the top of the yoghurt surface. Yogurt is thick and spoonable rather than tender and pourable.

The yoghurt sample that contains commercially available pectin as the stabilizer exhibited unsatisfying stabilization of the reference dispersion. The viscosity was high and the texture was lumpy and gelatinous, differing substantially from the sample prepared using the cacao pod husk derived pectin of the invention.

### Example 4:

### Preparation of milk coffee beverage

After extraction of 500 g of medium roasted ground Colombian coffee beans with 5 liters of hot water, the extract was cooled to below 25°C to obtain 4.5 liters of coffee extract. A sugar mixture was then obtained by dissolving 700 g of granular sugar and 3 g of sucrose fatty acid ester in 1.3 liters of purified water. The coffee extract (800 ml), the sugar mixture (400 ml), a stabilizing solution comprising 3% pectin A of Example 2 (400 ml) and water (200 ml) were mixed and milk was slowly added to a total volume of 2 liters. After mixing, L-ascorbic acid was used for adjustment of a pH value at 5.0, and the mixture was homogenized at 150 kg/cm2 to prepare a milk coffee beverage. The prepared milk coffee beverage was subjected to retort sterilization at 95°C for 10 minutes. The dispersion stabilizing function of cacao pod husk derived pectin A of the invention was evaluated based on heat stability. The prepared milk coffee beverage was heated to 95°C with a plate heater, poured into an empty can and sealed. The resulting canned milk coffee beverage was placed in a retort boiler for retort sterilization at 95°C for 10 minutes. The evaluation after hot vendor storage indicated that no milk protein precipitation or fat separation was observed when using cacao pod husk derived pectin A as the stabilizer. The acidity and flavor of the milk coffee beverage was also evaluated by an organoleptic evaluation. The organoleptic evaluation was conducted based on taste sampling by panelists (15) compared to the aroma and acidity of regular coffee. Obtained beverage was scored high for its pleasant and refreshing taste, and the scores were better than for the regular coffee beverage.

### Example 5:

### Cacao pod husk derived pectin as a stabilizer for a chocolate beverage

The cacao pod husk derived pectins A and B prepared according to Example 2 were used to prepare chocolate beverages A and B, respectively. As a control product, a beverage containing only water was made. 110 parts of water were mixed with 5 parts of cocoa powder, 13 parts of sugar, 5 parts of skimmed milk powder. Mixture A was obtained by mixing all the aforementioned ingredients with 5 parts of 5% cacao pod husk derived pectin A. Mixture B was of the same composition except it contained 5 parts of 5% cacao pod husk derived pectin B. The control mixture contained the equivalent amount of water (5 parts) instead of cacao pod husk derived pectin. All three mixtures were heated to 80°C while stirring with a homomixer. The beverages were further homogenized under a pressure of 150 kgf/cm² using a homogenizer. Each bottle was filled with the beverage and sterilized at 121°C for 30 minutes to obtain a chocolate beverage. The chocolate beverages obtained in this manner were allowed to stand for 1 week at ordinary temperature and were inspected for their stability. The beverage prepared using pectin A gave highly satisfactory results, with no precipitation, top separation, aggregation and other signs of phases division observed, while the beverage prepared using pectin B was slightly inferior showing some precipitation, top separation and mild aggregation. The control product characterized by the absence of cacao powder husk derived pectin showed almost immediate separation of oil and water phases and an unsatisfactory appearance.

### Example 6:

### Cacao pod husk derived pectin as a stabilizer for a fruit juice

A mixture containing orange juice concentrate (65° Brix) (2070 g), orange pulp (270 g), orange oils (2 g) orange flavor mix (14 g), citric acid (68 g) malic acid (54 g) sucrose (91 g) water (1450g) was mixed with cacao pod husk derived pectin (A, Example 2) in an amount allowing the obtaining 1.0% and 5.0% solutions of said pectin in the juice concentrate. In the control group, only water (250g) without said pectin was added.

The two test solutions and control solution were prepared by dissolving the sugar and the acids (citric and malic) in the water with the addition of cacao pod husk dietary fiber A in said concentrations of 1.0% and 5.0% or water, respectively. The obtained mixtures were added, with stirring, to the 65° Brix orange juice concentrate, followed by the orange essences, orange pulp, orange oil, and orange flavor mix.

Both of the juice concentrates containing cacao pod husk derived pectin A were characterized by better stability of the drink during its shelf life, better mouthfeel, and texture and flavor release than the control beverage containing only water. The cacao pod husk derived pectin even in low concentration (1.0 wt%) delayed phase separation and enabled excellent pulp suspension.

### Example 7:

### Oriental sauces containing cacao pod husk derived pectin

75 g of peanut butter was mixed at room temperature (15°C) with 50 g of cacao pod husk derived pectin A (Example 2) to obtain the test sample or 125 g of expanded starch to obtain the control sample in a mixer for 5 minutes.

Both samples appeared as a loose, free-flowing peanut paste, and were further used as a base material for an oriental sauce mixed further with: vinegar (20 g), black peanut paste (3 g), oyster sauce (3 g), five Chinese spice mix (5 g).

The cacao pod husk derived pectin showed an excellent stabilizing effect and no separation of phases of said oriental sauce. The sauce was tested by panelists (40).

The panelists concluded that the obtained sauce had no taste difference as compared to the control product containing starch instead of cacao pod husk derived pectin. Cacao pod husk derived pectin is suitable for the production of any other type of dressing with more or less oil or vinegar and with other components as required.

### Example 8:

### Cacao pod husk derived pectin as a coating agent in ice creams

Sugar coating compositions for coated ice creams were prepared having the compositions of 10 parts of 5% cacao pod husk derived pectin (A, Example 2), 40 parts of sugar, 25 parts of milk and 25 parts of water. As control product, a coated ice cream containing gum Arabic as a coating agent was used.

Sugar coating composition (10 parts cacao pod husk derived pectin, 40 parts sugar, 25 parts milk and 25 parts water) was used to prepare a chocolate ice cream. The sugar coating composition was dipped by an ordinary method on formed ice cream modeling forms (2.0 cm × 4.5 cm × 8.5 cm) and blow dried. Finally shellac was applied to obtain a sugar coated chocolate ice-cream. The results of evaluating the coatability, flaking of sugar coating, cracking and drying properties showed that both coatings (cacao pod husk derived pectin and gum Arabic) exerted good coatatbility properties with no flaking of said coating. The coating obtained by using of cacao pod husk derived pectin according to the present invention, showed no cracking of the said coating, while some cracking was observed in the samples made with gum Arabic. The cacao pod husk derived pectin coating kept the ice crystals small and improved the creaminess of said ice-cream.

### Example 9

### Cacao pod husk derived pectin as lecithin replacer in chocolate

Test mixture was made as a mixture of 15 kg of cacao bean powder with 7.9 kg cocoa liquor, 25.3 kg cocoa butter, 50.3 kg white sugar, 25 kg whole milk powder, 17.5 kg low fat milk powder was mixed with 0.15 kg of the cacao pod husk derived pectin of the invention.

As the reference mixture, chocolate containing the same amount of ingredients, 15 kg of cacao bean powder with 7.9 kg cocoa liquor, 25.3 kg cocoa butter, 50.3 kg white sugar, 25 kg whole milk powder, 17.5 kg low fat milk powder 0.15 kg lecithin was produced.

Both mixtures were kneaded and then worked in a 5-cylinder refiner.

The resulting masses were both subjected by conching and then treated like customary chocolate. Complete liquefication of the test chocolate mixture was performed by adding 8.9 kg cocoa butter and 0.4 kg cacao pod husk derived pectin.

Complete liquefication of the reference mixture was completed by adding 8.9 kg cocoa butter and 0.4 kg lecithin during conching.

The resulting liquid chocolate mixtures (test and reference mixtures) were tempered and molded in the devices for normal chocolate.

The chocolate end product made with cacao pod husk derived pectin was very pleasant in taste and quality, as evaluated by panelists (15). Its texture and taste was not significantly different from the reference mixture chocolate containing lecithin, as evaluated by panelists.

### Example 10:

### Skin and sun care O/W type cream

The suncare cream was obtained by mixing oil and water phases. The oil phase contained (wt%): fullerene (C 60; manufactured by Aldrich) 0.002, diethyl sebacate 15.0, paramethoxy octyl 5.0, stearyl alcohol 3.0, stearic acid 3.0, glyceryl monostearate 3.0, Liquid paraffin 3.0. The aqueous phase was composed of cacao pod husk derived pectin 3.0, triethanolamine 1.0, EDTA 2Na 0.05, titanium dioxide 5.0, glycerin 5.0, antioxidant q.s. preservative in water 25.0. Additionally, an appropriate amount of perfume was added. Oil phase was carefully dispersed into the water phase and emulsified using a homogenizer. The emulsion was cooled using heat exchange air to obtain an O/W type cream.

Obtained cream showed good stability and appearance. Moreover, it was characterized by a good functionality, enhancing the natural skin feel.

It is believed that the present invention is not limited to the embodiments described above and that some modifications or changes may be added to the examples described without revaluing the appended claims.

## Claims

1. Cacao pod husk derived pectin **characterized in**:
a) a degree of acetylation of 20-60 wt% of dry extract;
b) a degree of methylation of 10-30 wt% of dry extract;
c) a galacturonic acid content of at least 50 wt% of ash free dry matter, and wherein said cacao pod husk is substantially devoid from cacao beans.

2. A method for the preparation of said cacao pod husk derived pectin according to claim 1 comprising a hot water extraction from cacao husks, wherein the pH upon completion of the extraction is between pH 2.0 and pH 6.5, and wherein the temperature for the hot water extraction is between 90-100°C.

3. Method according to claim 2, wherein a pH value is adjusted by using acetic, citric, lactic, malic, tartaric, hydrochloric, nitric, oxalic, phosphoric and sulfuric acid.

4. Method according to claim 2, wherein the hot water extraction is performed by the addition of citric acid to adjust pH at 2.5 (1:25 (w/v)), during the 3 h.

5. Use of the cacao pod husk derived pectin according to claim 1 or obtained according to claims 2-4 as a dispersion stabilizer in a food product.

6. Use according to claim 5 of said cacao pod husk derived pectin, wherein said food product is a confectionery product.

7. Use according to claim 5 of said cacao pod husk derived pectin, wherein said food product is an acidic protein food product.

8. Use of the cacao pod husk derived pectin according to claim 1 or obtained according to claims 2-4 as a lecithin replacement in a food product.

9. Use according to claim 8 of said cacao pod husk derived pectin, wherein said food product is a confectionery product.

10. Use of the cacao pod husk derived pectin according to claim 1 or obtained according to claims 2-4 as an O/W emulsifier in food, cosmetic and pharmaceutical products.

11. Use according to claim 10 of said cacao pod husk derived pectin, wherein said cacao pod husk derived pectin is used in a concentration 0.05-50.00 wt%.

12. Use according to claim 10 of said cacao pod husk derived pectin, wherein said food product is a confectionery product.

13. Use of the cacao pod husk derived pectin according to claim 1 or obtained according to claims 2-4 as a coating agent in food, cosmetic and pharmaceutical products.

14. Use of the cacao pod husk derived pectin according to claim 1 or obtained according to claims 2-4 as an agent to increase the bake stability of water based fillings comprising said pectin.

15. Use of the cacao pod husk derived pectin according to claim 1 or obtained according to claims 2-4 as a texturizer in food comprising encapsulated probiotics.

16. Use of the cacao pod husk derived pectin according to claim 1 or obtained according to claims 2-4 as a mouthfeel improving agent.

17. Use of the cacao pod husk derived pectin according to claim 1 or obtained according to claims 2-4 as an elastic agent in food, cosmetic and pharmaceutical products.
